# EUROPEAN PATENT SPECIFICATION

(11) **EP 3 746 688 B1**
(45) Date of publication and mention of the grant of the patent: **22.12.2021**
(21) Application number: 18703615.7
(22) Date of filing: 30.01.2018
(51) Int. Cl.: F16L 9/19, F15B 13/08, F16L 39/00

(54) **PIPE ELEMENT AND CONNECTING ELEMENT FOR STARTING AIR SYSTEM OF PISTON ENGINE**
ROHRELEMENT UND VERBINDUNGSELEMENT FÜR DAS ANLASSLUFTSYSTEM EINES KOLBENMOTORS
ÉLÉMENT CONDUITE ET ÉLÉMENT DE RACCORDEMENT POUR SYSTÈME D'AIR DE DÉMARRAGE D'UN MOTEUR À PISTON

(43) Date of publication of application: 09.12.2020
(73) Proprietor: Wärtsilä Finland Oy, 65170 Vaasa (FI)
(72) Inventor: HYÖTY, Ilari, 65100 Vaasa (FI); SANDBERG, Juho, 65100 Vaasa (FI)
(74) Representative: Berggren Oy
(86) International application number: PCT/FI2018/050067
(87) International publication number: WO 2019/149988

(56) References cited:
- WO-A1-2017/102220
- GB-A- 2 541 489
- US-A- 4 036 617
- US-A1- 2007 029 140

## Description

### Technical field of the invention

The present invention relates to a pipe element for a starting air system of a piston engine in accordance with claim 1. The invention also concerns a connecting element for co-operation with two pipe elements as defined in the other independent claim.

### Background of the invention

Large internal combustion engines, such as ship engines, are usually started by using pressurized air. In some engines, pneumatic starting motor is used. Another option is to introduce the pressurized air into the cylinders of the engine in an appropriate order for moving the pistons and rotating the crankshaft. Each cylinder of the engine is therefore provided with a starting valve, which controls flow of pressurized air into the cylinder. The starting valves can be controlled pneumatically. Pneumatically controlled starting valves are connected to control air pipes. Each control air pipe is connected to timing equipment, which controls control air flow to each starting valve. Each engine requires an own engine-specific piping due to different distances between consecutive cylinders. Even different cylinder configurations of a certain engine type require specific piping arrangements because of different firing orders. Therefore, a large number of different components are needed for constructing starting air systems of different engines.

GB 2541489 A discloses a manifold comprising a first body and a second body, wherein the first body is dimensioned to fit within the second body. The first body comprises axial pathways and grooves connecting the pathways. The second body comprises hydraulic ports that can be in fluid communication with the axial pathways.

US 2007/0029140 A1 discloses a lubricant metering device. The device comprises a housing. The housing comprises an opening which can receive an insert. The housing further comprises outlet ports communicating with the opening.

WO 2017/102220 A1 discloses a connector for assembling two riser segments. The connector comprises drillings extending through a cylindrical wall of the connector.

### Summary of the invention

An object of the present invention is to provide an improved pipe element for a starting air system of a piston engine. The characterizing features of the pipe element according to the invention are given in claim 1. Another object of the invention is to provide a connecting element for co-operation with two pipe elements. The characterizing features of the connecting element are given in the other independent claim.

The pipe element according to the invention has a cylindrical outer surface, a first end surface at a first end of the pipe element and a second end surface at a second end of the pipe element. The pipe element comprises a central conduit for conveying pressurized air, the central conduit extending from the first end surface of the pipe element to the second end surface and comprising a branch for connecting the cylindrical outer surface of the pipe element to the central conduit, a group of transfer conduits for control air, each transfer conduit extending from the first end surface of the pipe element to the second end surface, all the transfer conduits having the same diameter and being arranged at the same radial distance from the outer surface of the pipe element, and a connecting conduit for control air, the connecting conduit extending from the first end surface of the pipe element to the second end surface, wherein the connecting conduit has the same diameter as the transfer conduits and the connecting conduit is arranged at the same radial distance from the outer surface of the pipe element as the transfer conduits and comprises a branch for connecting the cylindrical outer surface of the pipe element to the connecting conduit.

With the pipe element according to the invention, a starting air system of a piston engine can be constructed using modular elements, where all control air pipes are integrated into a single element. The central conduit can be used as a channel for working fluid. Each pipe element comprises a control air outlet for one cylinder and an additional outlet for instance for the working fluid of a starting air system or for other purposes. The same pipe elements can be used in starting air systems of different engines.

The connecting element according to the invention comprises a body having a cylindrical cavity, which cavity is configured to receive one end of a pipe element and an opposite end of another, identical pipe element such that the two pipe elements are located concentrically and the end surfaces of the two pipe elements face each other, wherein the body comprises a first drilling extending from an outer surface of the connecting element into the cylindrical cavity for fluid communication with the branch of the central conduit of one of the pipe elements, and a second drilling extending from an outer surface of the connecting element into the cylindrical cavity for fluid communication with the branch of the connecting conduit of one of the pipe elements. The connecting element further comprises a first groove that is arranged in the cylindrical cavity of the connecting element for establishing fluid communication between the branch of the central conduit of the pipe element and the first drilling of the connecting element, and a second groove that is arranged in the cylindrical cavity of the connecting element for establishing fluid communication between the branch of the connecting conduit of the pipe element and the second drilling of the connecting element.

With the connecting element according to the invention, two pipe elements can be connected to each other. The connecting element comprises an outlet for the control air and an additional outlet for instance for the working fluid. The same connecting elements can be used in the starting air systems of different engines, and the connecting element allows a control air pipe and the channel for working fluid to be connected to a starting valve in connection with a cylinder of an engine.

According to an embodiment of the invention, the transfer conduits have openings only on the first end surface and the second end surface of the pipe element. The central conduit is connected to the cylindrical outer surface of the pipe element only via a single branch. Also the connecting conduit is connected to the cylindrical outer surface of the pipe element only via a single branch. Each pipe element thus comprises only two outlets on the outer surface and provides thus connections for a single cylinder of an engine.

According to an embodiment of the invention, the central conduit is arranged concentrically with the longitudinal center axis of the pipe element.

According to an embodiment of the invention, the transfer conduits and the connecting conduit surround the central conduit.

According to an embodiment of the invention, the transfer conduits and the connecting conduit are distributed in the pipe element along a circular path such that each transfer conduit or the connecting conduit is at the same angular distance from the preceding conduit.

According to an embodiment of the invention, the pipe element comprises one connecting conduit and at least eight transfer conduits.

According to an embodiment of the invention, the central conduit has a greater diameter than the transfer conduits.

According to an embodiment of the invention, the branch of the central conduit is arranged close to the second end of the pipe element.

According to an embodiment of the invention, the branch of the connecting conduit is arranged close to the second end of the pipe element.

According to an embodiment of the invention, the branch of the central conduit and the branch of the connecting conduit are arranged at a distance from each other in the longitudinal direction of the pipe element.

According to an embodiment of the invention, the pipe element is an extruded aluminum profile.

According to an embodiment of the invention, the first groove and the second groove run in the circumferential direction of the connecting element.

According to an embodiment of the invention, the first groove and the second groove run over the whole inner perimeter of the connecting element.

A starting air system according to the invention comprises one pipe element defined above for each cylinder of the engine.

According to an embodiment of the invention, the starting air system further comprises between any two consecutive pipe elements of the starting air system a connecting element comprising a body having a cylindrical cavity, which cavity is configured to receive one end of a pipe element and an opposite end of another, identical pipe element such that the two pipe elements are located concentrically and the end surfaces of the two pipe elements face each other, wherein the body comprises a first drilling extending from an outer surface of the connecting element into the cylindrical cavity for fluid communication with the branch of the central conduit of one of the pipe elements, and a second drilling extending from an outer surface of the connecting element into the cylindrical cavity for fluid communication with the branch of the connecting conduit of one of the pipe elements.

A piston engine according to the invention comprises a starting air system defined above.

### Brief description of the drawings

Embodiments of the invention are described below in more detail with reference to the accompanying drawings, in which
Fig. 1 shows schematically a starting air system of a piston engine,
Fig. 2 shows part of a pipe element according to an embodiment of the invention,
Fig. 3 shows a connecting element according to an embodiment of the invention,
Fig. 4 shows a cross-sectional view of the pipe element of Fig. 1,
Fig. 5 shows a cross-sectional view of the connecting element of Fig. 3,
Fig. 6 shows a cross-sectional view of a pipe element and a connecting element,
Fig. 7 shows two pipe elements connected to a connecting element,
Fig. 8 shows a cross-sectional view of the assembly of Fig. 7,
Fig. 9 shows an end piece for a starting air system,
Fig. 10 shows a cross-sectional view of an end piece and a pipe element,
Fig. 11 shows a pipe element assembly of a six-cylinder in-line engine, and
Fig. 12 shows cross-sectional views of the pipe elements and connecting elements of a six-cylinder in-line engine.

### Description of embodiments of the invention

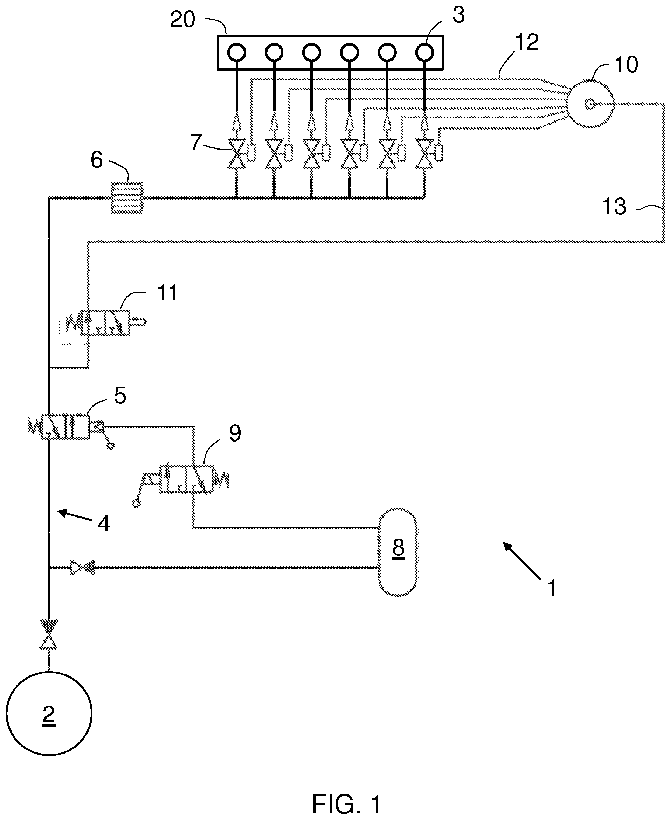

Figure 1 shows schematically a starting air system 1 of a piston engine 20. The engine 20 is a large internal combustion engine, such as a main or an auxiliary engine of a ship or an engine that is used at a power plant for producing electricity. The cylinder diameter of the engine 20 is at least 150 mm. The rated power of the engine is at least 150 kW/cylinder. In the embodiment of figure 1, the engine 20 is an in-line engine comprising six cylinders 3. The engine 20 could comprise any reasonable number of cylinders 3. The cylinders 3 could also be arranged in a V-configuration. The starting air system 1 is configured to introduce pressurized air into cylinders 3 of the engine 20 for moving the pistons and rotating the crankshaft of the engine 20 until the engine 20 reaches sufficient rotation speed for the start of combustion. Starting air may be introduced into all cylinders 3 of the engine 20. However, especially in V-engines, it is possible that starting air is introduced only into some of the cylinders 3.

The starting air system 1 comprises a source of compressed air 2. The source of compressed air 2 could a compressed air network, a compressor or an air tank. Compressed air is led to the cylinders 3 of the engine 20 via a pipe system 4 through a master starting valve 5 and further to each cylinder 3 through a flame arrester 6. The supply of compressed air is controlled by a starting valve 7 in conjunction with each cylinder 3. The operation of each starting valve 7 is controlled by timing equipment 10 using control air.

Also the master starting valve 5 is pneumatically controlled by control air. Control air is received from a compressed air storage 8 via an electrically controlled solenoid valve 9. The distribution of compressed air to the cylinders 3 is performed by the timing equipment 10, which controls the valves 7 pneumatically. Compressed air is led to the timing equipment 10 through a pipe 13. By means of the timing equipment 10, compressed air is supplied to the specific starting valve 7, the opening of which is required in that particular case. The operation of the starting valves 7 is thus synchronized with the work cycle of the engine 20 by means of the timing equipment 10. From the timing equipment 10 a conduit 12 leads to each starting valve 7, respectively. The pipe system 4 is also provided with a blocking valve 11 for ensuring that the engine cannot be started if, for instance, the engine gear is on. The timing equipment 10 may be coupled mechanically with a rotating part of the engine 20, such as a camshaft, whereby it is in direct connection with the rotating part of the engine thereby enabling a timely supply of compressed air to each cylinder 3.

Since the control air needs to be supplied to each starting valve 7 of the engine 20, each starting valve 7 needs to be connected to the timing equipment 10. The distance from the timing equipment 10 to each starting valve 7 is different, which means that the conduits 12 between the starting valves 7 and the timing equipment 10 are of different lengths. A certain engine type may be offered in different cylinder configurations, for instance as four-, six- or eight-cylinder in-line engines and as different V-engines. Since the firing order of e.g. a six-cylinder engine is different than the firing order of an eight-cylinder engine, different control air piping is needed for different engines even in case the distance between two consecutive cylinders is the same. The number of different components needed for constructing control air pipe arrangements for different engines can thus be significant.

A pipe element and a connecting element according to the invention provide a modular solution, which allows the same components to be used in air injection systems of different engines. The pipe element according to the invention integrates the air conduits 12 for control air into a single component.

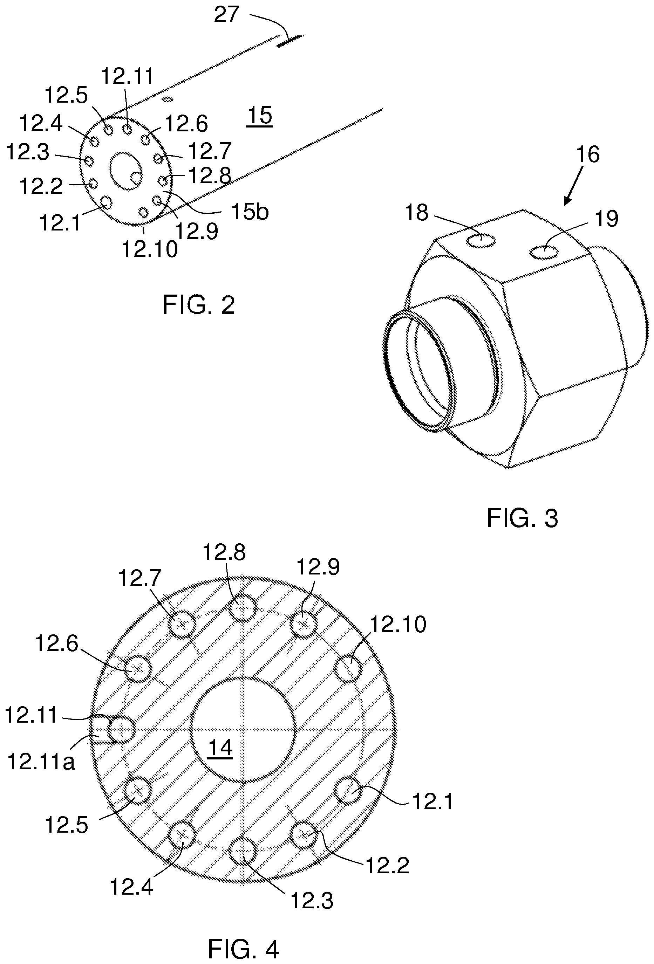

Figure 2 shows part of a pipe element 15 according to an embodiment of the invention. Other views of the pipe element 15 are shown in figures 4, 6-8 and 10-12. The pipe element 15 is an elongated cylindrical part. The length of the pipe element 15 corresponds to the distance between two cylinders 3 of the engine 20. The pipe element 15 can be made of e.g. aluminum or aluminum alloy. The pipe element 15 can be made by, for instance, extrusion. The pipe element 15 has a first end surface 15a (not shown in figure 2) at a first end of the pipe element 15 and a second end surface 15b at a second end of the pipe element 15. The pipe element 15 comprises a central conduit 14 for conveying pressurized air. The central conduit 14 can be used for conveying air that is introduced into the cylinders 3 of the engine 20 for starting the engine 20. The central conduit 14 can thus function as a channel for the working fluid of the starting air system and it can form part of the piping of the starting air system. For instance, the central conduit 14 can form part of the pipe downstream from the flame arrester 6. The central conduit 14 can thus be arranged immediately upstream from the starting air valves 7. Alternatively, the central conduit can be used for some other purpose.

The central conduit 14 extends from the first end surface 15a of the pipe element 15 to the second end surface 15b. The central conduit 14 is arranged concentrically with the longitudinal center axis of the pipe element 15. The central conduit 14 comprises a branch 14a for connecting the cylindrical outer surface of the pipe element 15 to the central conduit 14. The branch 14a thus forms an air outlet for the central conduit 14. The branch 14a allows the central conduit 14 to be connected for example to a starting air valve 7. The branch 14a extends in a radial direction of the pipe element 15 outwards from the central conduit 14. The branch 14a is arranged close to the second end of the pipe element 15.

The pipe element 15 further comprises a group of transfer conduits 12.1, 12.2, 12.3, 12.4, 12.5, 12.6, 12.7, 12.8, 12.9, 12.10 for control air. Each transfer conduit 12.1, 12.2, 12.3, 12.4, 12.5, 12.6, 12.7, 12.8, 12.9, 12.10 extends from the first end surface 15a of the pipe element 15 to the second end surface 15b. Apart from the openings on the end surfaces 15a, 15b of the pipe element 15, the transfer conduits 12.1, 12.2, 12.3, 12.4, 12.5, 12.6, 12.7, 12.8, 12.9, 12.10 do not comprise any other openings. All the transfer conduits have the same diameter and they are arranged at the same radial distance from the outer surface of the pipe element 15. The transfer conduits 12.1, 12.2, 12.3, 12.4, 12.5, 12.6, 12.7, 12.8, 12.9, 12.10 of the pipe element 15 form at least part of the conduits 12 between the timing equipment 10 and the starting valves 7. The transfer conduits are thus used for conveying control air from the timing equipment 10 to the starting air valves 7 for controlling the opening of the starting air valves 7.

The pipe element 15 further comprises a connecting conduit 12.11 for control air. The connecting conduit 12.11 extends from the first end surface 15a of the pipe element 15 to the second end surface 15b and has the same diameter as the transfer conduits 12.1, 12.2, 12.3, 12.4, 12.5, 12.6, 12.7, 12.8, 12.9, 12.10. The connecting conduit 12.11 is also arranged at the same radial distance from the outer surface of the pipe element 15 as the transfer conduits 12.1, 12.2, 12.3, 12.4, 12.5, 12.6, 12.7, 12.8, 12.9, 12.10. The connecting conduit 12.11 comprises a branch 12.11a for connecting the cylindrical outer surface of the pipe element 15 to the connecting conduit 12.11. The branch 12.11a thus forms an air outlet for the connecting conduit 12.11. The branch 12.11a extends radially outwards from the connecting conduit 12.11a. The branch 12.11a is arranged close to the second end of the pipe element 15. In the longitudinal direction of the pipe element 15, the branch 12.11a of the connecting conduit 12.11 is arranged at a distance from the branch 14a of the central conduit 14. In the embodiment of the figures, the branch 12.11a of the connecting conduit 12.11 and the branch 14a of the central conduit 14 are arranged on opposite sides of the pipe element 15. Except for the branch 12.11a, the connecting conduit 12.11 is identical to the transfer conduits 12.1, 12.2, 12.3, 12.4, 12.5, 12.6, 12.7, 12.8, 12.9, 12.10. The connecting conduit 12.11 does thus not comprise any other openings than the branch 12.11a and the openings on the end surfaces 15a, 15b of the pipe element 15.

In the embodiment of the figures, the pipe element 15 comprises ten transfer conduits 12.1, 12.2, 12.3, 12.4, 12.5, 12.6, 12.7, 12.8, 12.9, 12.10. Each transfer conduit is arranged at the same angular distance from an adjacent transfer conduit. In the embodiment of the figures, the angle between two adjacent transfer conduits 12.1, 12.2, 12.3, 12.4, 12.5, 12.6, 12.7, 12.8, 12.9, 12.10 is 30 degrees. However, the last transfer conduit 12.10 and the first transfer conduit 12.1 form an exception, and the angular distance between those conduits is different, in the embodiment of the figures more than 30 degrees. The greater angular distance between one pair of transfer conduits 12.10, 12.1 helps accommodating the branch 14a of the central conduit 14. Both the transfer conduits 12.1, 12.2, 12.3, 12.4, 12.5, 12.6, 12.7, 12.8, 12.9, 12.10 and the connecting conduit 12.11 surround the central conduit 14. The transfer conduits and the connecting conduit are distributed along a circular path, and each conduit is at the same angular distance from the preceding conduit, except for the first conduit 12.1 along the path. In the embodiment of the figures, the connecting conduit 12.11 is the middlemost of the 11 conduits. The central conduit 14 has a greater diameter than the transfer conduits 12.1, 12.2, 12.3, 12.4, 12.5, 12.6, 12.7, 12.8, 12.9, 12.10 and the connecting conduit 12.11.

A plurality of pipe elements 15 can be connected consecutively for forming conduits 12 for control air and an additional air conduit 14 for instance for introducing pressurized air into the cylinders 3 of an engine 20 for starting the engine 20. One pipe element 15 is provided for each cylinder 3 of the engine 20. Since each pipe element 15 is provided with a branch 14a of the central conduit 14 and with one connecting conduit 12.11 comprising a branch 12.11a, both control air and working fluid is conveyed to each starting air valve 7 via one of the pipe elements 15. The pipe elements 15 can be connected to each other by means of a connecting element 16, which is shown for example in figure 3. The outer surface of the pipe element 15 is provided with an alignment mark 27, which can be used for selecting the correct angular position for each pipe element 15.

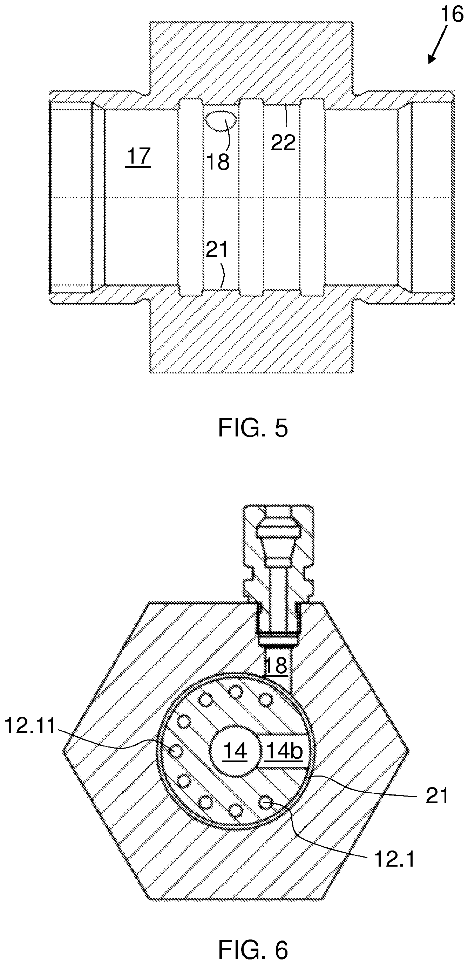

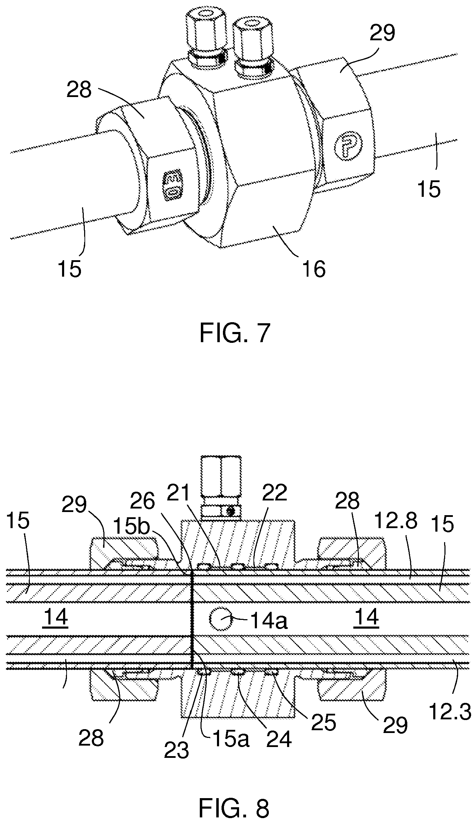

Figure 3 shows a connecting element 16 according to an embodiment of the invention. Figures 5-8 and 10-12 show other views of the connecting element 16. The connecting element 16 can be used between two pipe elements 15. The connecting element 16 is configured to cooperate with two pipe elements 15. The connecting element 16 comprises a body having a cylindrical cavity 17. The cavity 17 is configured to receive a first end of a pipe element 15 and a second end of another pipe element 15. The pipe elements 15 can be inserted concentrically into the cavity 17, as shown in figure 8. The second end of one of the pipe elements 15 faces the first end of the other pipe element 15. The connecting element 16 comprises a first drilling 18 and a second drilling 19. The first drilling 18 and the second drilling 19 extend from the outer surface of the connecting element 16 to the cavity 17. The first drilling 18 and the second drilling 19 are arranged at a distance from each other in the longitudinal direction of the cavity 17. The first drilling 18 can be arranged in fluid communication with the branch 14a of the central conduit 14. The second drilling 19 can be arranged in fluid communication with the branch 12.11a of the connecting conduit 12.11. The distance between the first drilling 18 and the second drilling 19 corresponds to the distance between the branch 14a of the central conduit 14 and the branch 12.11a of the connecting conduit 12.11. The cavity 17 is provided with a first groove 21. The first groove 21 runs in the circumferential direction of the connecting element 16 over the whole inner perimeter of the connecting element 16. The first drilling 18 opens into the first groove 21. The first groove 21 connects the first drilling 18 to the branch 14a of the central conduit 14 irrespective of the angular position of the pipe element 15 within the cavity 17. However, the first groove 21 is not necessary, but also the outer surface of the pipe element 15 could be provided with a groove for establishing fluid communication between the branch 14a of the central conduit 14 and the first drilling 18 of the connecting element 16. The cavity 17 is further provided with a second groove 22. The second groove 22 runs in the circumferential direction of the connecting element 16 over the whole inner perimeter of the connecting element 16. The second drilling 19 opens into the second groove 22. The second groove 22 connects the second drilling 19 to the branch 12.11a of the connecting conduit 12.11. The second groove 22 could also be arranged on the outer surface of the pipe element 15. The distance between the first groove 21 and the second groove 22 corresponds to the distance between the openings of the branch 14a of the central conduit 14 and the branch 12.11a of the connecting conduit 12.11 on the outer surface of the pipe element 15.

Figure 7 shows two pipe elements 15 connected to a connecting element 16. Figure 8 shows a cross-sectional view of the assembly of figure 7. Both pipe elements 15 are inserted into the cavity 17 of the connecting element 16. The first end surface 15a of one of the pipe elements 15 faces the second end surface 15b of the other pipe element 15. A seal 26 is arranged between the end surfaces 15a, 15b. Seals 23, 24, 25 are also arranged on both sides of the first groove 21 and the second groove 22 of the cavity 17 in the longitudinal direction of the cavity 17. The seals 23, 24, 25 can be e.g. O-rings. In the embodiment of the figures, one annular seal 24 is arranged between the grooves 21, 22 and one annular seal 23, 25 is arranged outwards from each of the grooves 21, 22 in the longitudinal direction of the cavity 17. The pipe elements 15 are arranged such that the branch 14a of the central conduit 14 of one of the pipe elements 15 is aligned with the first groove 21 of the connecting element 16 in the longitudinal direction of the cavity 17. Similarly, the branch 12.11a of the connecting conduit 12.11 of the same pipe element 15 is aligned with the second groove 22 of the connecting element 16 in the longitudinal direction of the cavity 17. The central conduit 14 is thus in fluid communication with the first drilling 18 of the connecting element 16 and the connecting conduit 12.11 is in fluid communication with the second drilling 19 of the connecting element 16. The pipe elements 15 are attached to the connecting element 16 by means of cutting ring fitting. The cutting ring fitting comprises a cutting ring 28 and a nut 29.

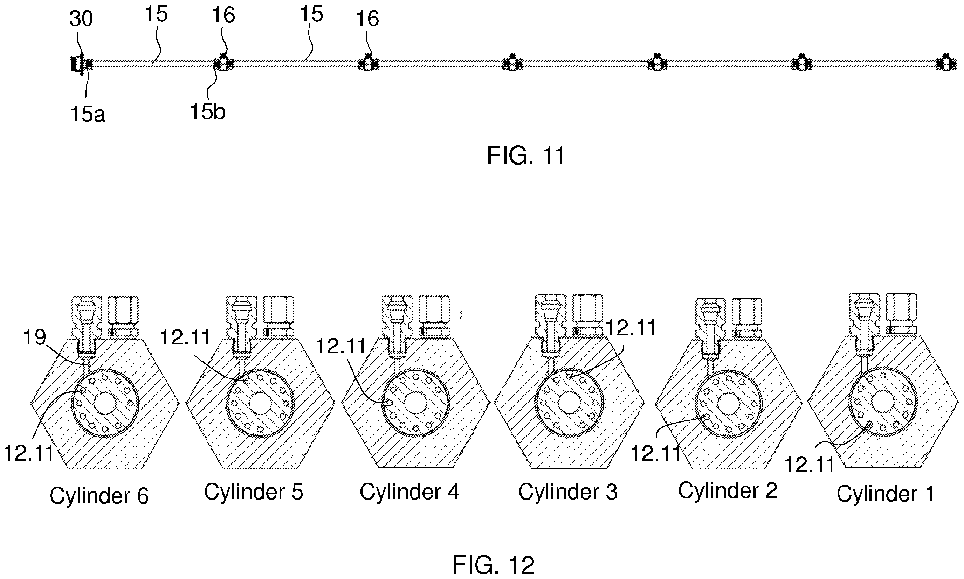

Figures 11 and 12 show pipe elements 15 of a six-cylinder engine. Each cylinder of the engine is provided with a pipe element 15. A connecting element 16 is arranged between each two pipe elements 15. An end piece 30 is arranged at one end of the conduits formed by the pipe elements 15. Each pipe element 15 supplies control air to a starting air valve 7 of one cylinder 3. By arranging each pipe element 15 in an appropriate angular position, control air from the timing equipment 10 of the starting air system is supplied to each starting air valve 7 with correct timing. The transfer conduits 12.1, 12.2, 12.3, 12.4, 12.5, 12.6, 12.7, 12.8, 12.9, 12.10 of consecutive pipe elements 15 form continuous conduits for control air. As the control air is supplied from the timing equipment 10 to one of the transfer conduits, the control air flows further in the conduit until it reaches a connecting conduit 12.11 of one of the pipe elements 15. Via the connecting conduit 12.11, the control air is conveyed to a starting air valve 7, which is actuated by the pressure of the control air.

In the example of figure 12, the firing order of the engine is 1-2-4-6-5-3. In a zero position of the pipe elements 15, the alignment mark 27 and the branch 12.11a of the connecting conduit 12.11 point downwards. The pipe element 15 of cylinder 1 is rotated 30° compared to the zero position. The pipe element 15 of cylinder 2, which is the second cylinder in the firing order, has a rotational position of 60°. The pipe element 15 of cylinder 4 has a rotational position of 90°, the pipe element 15 of cylinder 6 120°, the pipe element 15 of cylinder 5 150°, and the pipe element 15 of cylinder 3 180°. By arranging each pipe element 15 to a predetermined angular position, a correct control air conduit can thus be connected to each starting air valve 7.

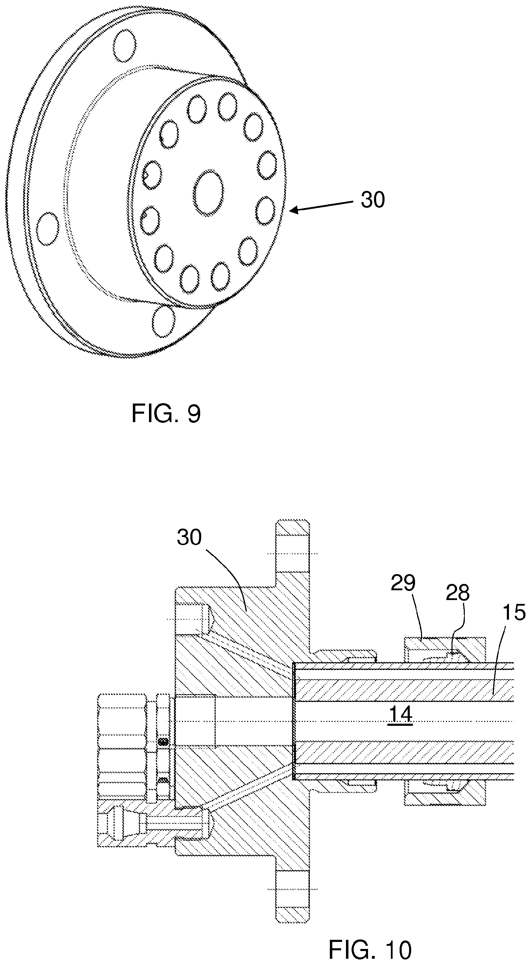

Figures 9 and 10 show an end piece 30 for connecting one of the pipe elements 5 to the timing equipment 10. The pipe element 15 is attached to the end piece 30 in the same way as to the connecting element by means of a cutting ring fitting comprising a cutting ring 28 and a nut 29.

It will be appreciated by a person skilled in the art that the invention is not limited to the embodiments described above, but may vary within the scope of the appended claims.

## Claims

1. A pipe element (15) for a starting air system (1) of a piston engine (20), the pipe element (15) having a cylindrical outer surface, a first end surface (15a) at a first end of the pipe element (15) and a second end surface (15b) at a second end of the pipe element (15), the pipe element (15) comprising
- a central conduit (14) for conveying pressurized air, the central conduit (14) extending from the first end surface (15a) of the pipe element (15) to the second end surface (15b),
- a group of transfer conduits (12.1, 12.2, 12.3, 12.4, 12.5, 12.6, 12.7, 12.8, 12.9, 12.10) for control air, each transfer conduit extending from the first end surface (15a) of the pipe element (15) to the second end surface (15b), all the transfer conduits having the same diameter and being arranged at the same radial distance from the outer surface of the pipe element (15), and
- a connecting conduit (12.11) for control air, the connecting conduit (12.11) extending from the first end surface (15a) of the pipe element (15) to the second end surface (15b), wherein the connecting conduit (12.11) has the same diameter as the transfer conduits (12.1, 12.2, 12.3, 12.4, 12.5, 12.6, 12.7, 12.8, 12.9, 12.10) and the connecting conduit (12.11) is arranged at the same radial distance from the outer surface of the pipe element (15) as the transfer conduits and comprises a branch (12.11a) for connecting the cylindrical outer surface of the pipe element (15) to the connecting conduit (12.11),
**characterized in that** the central conduit (14) comprises a branch (14a) for connecting the cylindrical outer surface of the pipe element (15) to the central conduit (14).

2. A pipe element (15) according to claim 1, wherein the transfer conduits (12.1, 12.2, 12.3, 12.4, 12.5, 12.6, 12.7, 12.8, 12.9, 12.10) have openings only on the first end surface (15a) and the second end surface (15b) of the pipe element (15).

3. A pipe element (15) according to claim 1 or 2, wherein the central conduit (14) is connected to the cylindrical outer surface of the pipe element (15) only via a single branch (14a).

4. A pipe element (15) according to any of claims 1 to 3, wherein the connecting conduit (12.11) is connected to the cylindrical outer surface of the pipe element (15) only via a single branch (12.11a).

5. A pipe element (15) according to any of the preceding claims, wherein the central conduit (14) is arranged concentrically with the longitudinal center axis of the pipe element (15) and the transfer conduits (12.1, 12.2, 12.3, 12.4, 12.5, 12.6, 12.7, 12.8, 12.9, 12.10) and the connecting conduit (12.11) surround the central conduit (14).

6. A pipe element (15) according to any of the preceding claims, wherein the transfer conduits (12.1, 12.2, 12.3, 12.4, 12.5, 12.6, 12.7, 12.8, 12.9, 12.10) and the connecting conduit (12.11) are distributed in the pipe element (15) along a circular path such that each transfer conduit or the connecting conduit is at the same angular distance from the preceding conduit (12.1, 12.2, 12.3, 12.4, 12.5, 12.6, 12.7, 12.8, 12.9, 12.10, 12.11).

7. A pipe element (15) according to any of the preceding claims, wherein the central conduit (14) has a greater diameter than the transfer conduits (12.1, 12.2, 12.3, 12.4, 12.5, 12.6, 12.7, 12.8, 12.9, 12.10).

8. A pipe element (15) according to any of the preceding claims, wherein the branch (14a) of the central conduit (14) is arranged close to the second end of the pipe element (15) and the branch (12.11a) of the connecting conduit (12.11) is arranged close to the second end of the pipe element (15).

9. A pipe element (15) according to any of the preceding claims, wherein the branch (14a) of the central conduit (14) and the branch (12.11a) of the connecting conduit (12.11) are arranged at a distance from each other in the longitudinal direction of the pipe element (15).

10. A connecting element (16) for co-operation with two pipe elements (15) according to any of the preceding claims, wherein the connecting element (16) comprises a body having a cylindrical cavity (17), which cavity (17) is configured to receive one end of a pipe element (15) and an opposite end of another, identical pipe element (15) such that the two pipe elements (15) are located concentrically and the end surfaces (15a, 15b) of the two pipe elements (15) face each other, wherein the body comprises a first drilling (18) extending from an outer surface of the connecting element (16) into the cylindrical cavity (17) for fluid communication with the branch (14a) of the central conduit (14) of one of the pipe elements (15), and a second drilling (19) extending from an outer surface of the connecting element (16) into the cylindrical cavity (17) for fluid communication with the branch (12.11a) of the connecting conduit (12.11) of one of the pipe elements (15), **characterized in that** the connecting element (16) comprises a first groove (21) that is arranged in the cylindrical cavity (17) of the connecting element (16) for establishing fluid communication between the branch (14a) of the central conduit (14) of the pipe element (15) and the first drilling (18) of the connecting element (16), and a second groove (22) that is arranged in the cylindrical cavity (17) of the connecting element (16) for establishing fluid communication between the branch (12.11a) of the connecting conduit (12.11) of the pipe element (15) and the second drilling (19) of the connecting element (16).

11. A connecting element (16) according to claim 10, wherein the first groove (21) and the second groove (22) run in the circumferential direction of the connecting element (16).

12. A connecting element (16) according to claim 10 or 11, wherein the first groove (21) and the second groove (22) run over the whole inner perimeter of the connecting element (16).

13. A starting air system (1) for a piston engine (20), the starting air system (1) comprising one pipe element (15) according to any of claims 1 to 9 for each cylinder (3) of the engine (20).

14. A starting air system (1) according to claim 13, wherein the system further comprises between any two consecutive pipe elements (15) of the starting air system (1) a connecting element (16), which connecting element (16) comprises a body having a cylindrical cavity (17), which cavity (17) is configured to receive one end of a pipe element (15) and an opposite end of another, identical pipe element (15) such that the two pipe elements (15) are located concentrically and the end surfaces (15a, 15b) of the two pipe elements (15) face each other, wherein the body comprises a first drilling (18) extending from an outer surface of the connecting element (16) into the cylindrical cavity (17) for fluid communication with the branch (14a) of the central conduit (14) of one of the pipe elements (15), and a second drilling (19) extending from an outer surface of the connecting element (16) into the cylindrical cavity (17) for fluid communication with the branch (12.11a) of the connecting conduit (12.11) of one of the pipe elements (15).

15. A piston engine (20) comprising a starting air system (1) according to claim 13 or 14.

## Patentansprüche

1. Rohrelement (15) für ein Startluftsystem (1) eines Kolbenmotors (20), wobei das Rohrelement (15) eine zylindrische Außenfläche, eine erste Endfläche (15a) an einem ersten Ende des Rohrelements (15) und eine zweite Endfläche (15b) an einem zweiten Ende des Rohrelements (15) aufweist, wobei das Rohrelement (15) Folgendes umfasst:
- eine zentrale Leitung (14) zum Fördern von Druckluft, wobei sich die zentrale Leitung (14) von der ersten Endfläche (15a) des Rohrelements (15) zur zweiten Endfläche (15b) erstreckt,
- eine Gruppe von Übertragungsleitungen (12.1, 12.2, 12.3, 12.4, 12.5, 12.6, 12.7, 12.8, 12.9, 12.10) für Steuerluft, wobei sich jede Übertragungsleitung von der ersten Endfläche (15a) des Rohrelements (15) zur zweiten Endfläche (15b) erstreckt, wobei alle Übertragungsleitungen denselben Durchmesser aufweisen und in demselben radialen Abstand von der Außenfläche des Rohrelements (15) angeordnet sind, und
- eine Verbindungsleitung (12.11) für Steuerluft, wobei sich die Verbindungsleitung (12.11) von der ersten Endfläche (15a) des Rohrelements (15) zur zweiten Endfläche (15b) erstreckt, wobei die Verbindungsleitung (12.11) den gleichen Durchmesser wie die Übertragungsleitungen (12.1, 12.2, 12.3, 12.4, 12.5, 12.6, 12.7, 12.8, 12.9, 12.10) hat, und die Verbindungsleitung (12.11) im gleichen radialen Abstand von der Außenfläche des Rohrelements (15) angeordnet ist wie die Überleitungsleitungen, und eine Abzweigung (12.11a) zum Verbinden der zylindrischen Außenfläche des Rohrelements (15) mit der Verbindungsleitung (12.11) umfasst,
**dadurch gekennzeichnet, dass** die zentrale Leitung (14) eine Abzweigung (14a) zum Verbinden der zylindrischen Außenfläche des Rohrelements (15) mit der zentralen Leitung (14) umfasst.

2. Rohrelement (15) nach Anspruch 1, wobei die Übertragungsleitungen (12.1, 12.2, 12.3, 12.4, 12.5, 12.6, 12.7, 12.8, 12.9, 12.10) Öffnungen nur an der ersten Endfläche (15a) und der zweiten Endfläche (15b) des Rohrelements (15) aufweisen.

3. Rohrelement (15) nach Anspruch 1 oder 2, wobei die zentrale Leitung (14) nur über eine einzige Abzweigung (14a) mit der zylindrischen Außenfläche des Rohrelements (15) verbunden ist.

4. Rohrelement (15) nach einem der Ansprüche 1 bis 3, wobei die Verbindungsleitung (12.11) nur über eine einzige Abzweigung (12.11a) mit der zylindrischen Außenfläche des Rohrelements (15) verbunden ist.

5. Rohrelement (15) nach einem der vorhergehenden Ansprüche, wobei die zentrale Leitung (14) konzentrisch zur Längsmittelachse des Rohrelements (15) angeordnet ist und die Überleitungsleitungen (12.1, 12.2, 12.3, 12.4, 12.5, 12.6, 12.7, 12.8, 12.9, 12.10), und die Verbindungsleitung (12.11) die zentrale Leitung (14) umgeben.

6. Rohrelement (15) nach einem der vorhergehenden Ansprüche, **dadurch gekennzeichnet, dass** die Überleitungsleitungen (12.1, 12.2, 12.3, 12.4, 12.5, 12.6, 12.7, 12.8, 12.9, 12.10) und die Verbindungsleitung (12.11) im Rohrelement (15) entlang einer Kreisbahn verteilt sind, so dass jede Überleitungsleitung oder die Verbindungsleitung den gleichen Winkelabstand von der vorhergehenden Leitung (12.1, 12.2, 12.3, 12.4, 12.5, 12.6, 12.7, 12.8, 12.9, 12.10, 12.11) aufweist.

7. Rohrelement (15) nach einem der vorhergehenden Ansprüche, wobei die zentrale Leitung (14) einen größeren Durchmesser aufweist als die Überleitungsleitungen (12.1, 12.2, 12.3, 12.4, 12.5, 12.6, 12.7, 12.8, 12.9, 12.10).

8. Rohrelement (15) nach einem der vorhergehenden Ansprüche, wobei die Abzweigung (14a) der zentralen Leitung (14) nahe dem zweiten Ende des Rohrelements (15) angeordnet ist, und die Abzweigung (12.11a) der Verbindungsleitung (12.11) nahe dem zweiten Ende des Rohrelements (15) angeordnet ist.

9. Rohrelement (15) nach einem der vorhergehenden Ansprüche, **dadurch gekennzeichnet, dass** die Abzweigung (14a) der zentrale Leitung (14) und die Abzweigung (12.11a) der Verbindungsleitung (12.11) in Längsrichtung des Rohrelements (15) mit Abstand voneinander angeordnet sind.

10. Verbindungselement (16) zum Zusammenwirken mit zwei Rohrelementen (15) nach einem der vorhergehenden Ansprüche, wobei das Verbindungselement (16) einen Körper mit einem zylindrischen Hohlraum (17) umfasst, wobei der Hohlraum (17) konfiguriert ist, um ein Ende eines Rohrelements (15) und ein gegenüberliegendes Ende eines anderen identischen Rohrelements (15) aufzunehmen, so dass die beiden Rohrelemente (15) konzentrisch liegen und die Endflächen (15a, 15b) der beiden Rohrelemente (15) einander zugewandt sind, wobei der Körper eine erste Bohrung (18), die sich von einer Außenfläche des Verbindungselements (16) in den zylindrischen Hohlraum (17) für eine Fluidverbindung mit der Abzweigung (14a) der zentralen Leitung (14) eines der Rohrelemente (15) erstreckt, und eine zweite Bohrung (19) umfasst, die sich von einer Außenfläche des Verbindungselements (16) in den zylindrischen Hohlraum (17) zur Fluidverbindung mit der Abzweigung (12.11a) der Verbindungsleitung (12.11) eines der Rohrelemente (15) erstreckt, **dadurch gekennzeichnet, dass** das Verbindungselement (16) eine erste Nut (21), die im zylindrischen Hohlraum (17) des Verbindungselementes (16) angeordnet ist, um eine Fluidverbindung zwischen der Abzweigung (14a) der zentralen Leitung (14) des Rohrelements (15) und der ersten Bohrung (18) des Verbindungselements (16) herzustellen, und eine zweite Nut (22) umfasst, die in dem zylindrischen Hohlraum (17) des Verbindungselements (16) angeordnet ist, um eine Fluidverbindung zwischen der Abzweigung (12.11a) der Verbindungsleitung (12.11) des Rohrelements (15) und der zweiten Bohrung (19) des Verbindungselements (16) herzustellen.

11. Verbindungselement (16) nach Anspruch 10, wobei die erste Nut (21) und die zweite Nut (22) in Umfangsrichtung des Verbindungselements (16) verlaufen.

12. Verbindungselement (16) nach Anspruch 10 oder 11, wobei die erste Nut (21) und die zweite Nut (22) über den gesamten Innenumfang des Verbindungselements (16) verlaufen.

13. Startluftsystem (1) für einen Kolbenmotor (20), wobei das Startluftsystem (1) für jeden Zylinder (3) des Motors (20) ein Rohrelement (15) nach einem der Ansprüche 1 bis 9 umfasst.

14. Startluftsystem (1) nach Anspruch 13, wobei das System ferner zwischen zwei beliebigen aufeinanderfolgenden Rohrelementen (15) des Startluftsystems (1) ein Verbindungselement (16) umfasst, wobei das Verbindungselement (16) einen Körper mit einem zylindrischen Hohlraum (17) umfasst, wobei der Hohlraum (17) konfiguriert ist, um ein Ende eines Rohrelements (15) und ein gegenüberliegendes Ende eines anderen identischen Rohrelements (15) aufzunehmen, so dass die beiden Rohrelemente (15) konzentrisch liegen und die Endflächen (15a, 15b) der beiden Rohrelemente (15) einander zugewandt sind, wobei der Körper eine erste Bohrung (18), die sich von einer Außenfläche des Verbindungselements (16) in den zylindrischen Hohlraum (17) zur Fluidverbindung mit der Abzweigung (14a) der zentralen Leitung (14) eines der Rohrelemente (15) erstreckt, und eine zweite Bohrung (19) umfasst, die sich von einer Außenfläche des Verbindungselements (16) in den zylindrischen Hohlraum (17) zur Fluidverbindung mit der Abzweigung (12.11a) der Verbindungsleitung (12.11) eines der Rohrelemente (15) erstreckt.

15. Kolbenmotor (20) mit einem Startluftsystem (1) nach Anspruch 13 oder 14.

## Revendications

1. Élément de conduite (15) pour un système d'air de démarrage (1) d'un moteur à piston (20), l'élément de conduite (15) ayant une surface extérieure cylindrique, une première surface d'extrémité (15a) à une première extrémité de l'élément de conduite (15) et une seconde surface d'extrémité (15b) à une seconde extrémité de l'élément de conduite (15), l'élément de conduite (15) comprenant
- un conduit central (14) pour acheminer l'air sous pression, le conduit central (14) s'étendant entre la première surface d'extrémité (15a) de l'élément de conduite (15) et la seconde surface d'extrémité (15b),
- un groupe de conduits de transfert (12.1, 12.2, 12.3, 12.4, 12.5, 12.6, 12.7, 12.8, 12.9, 12.10) pour l'air de commande, chaque conduit de transfert s'étendant entre la première surface d'extrémité (15a) de l'élément de conduite (15) et la seconde surface d'extrémité (15b), tous les conduits de transfert ayant le même diamètre et étant agencés à la même distance radiale de la surface extérieure de l'élément de conduite (15), et
- un conduit de raccordement (12.11) pour l'air de commande, le conduit de raccordement (12.11) s'étendant entre la première surface d'extrémité (15a) de l'élément de conduite (15) et la seconde surface d'extrémité (15b), dans lequel le conduit de raccordement (12.11) a le même diamètre que les conduits de transfert (12.1, 12.2, 12.3, 12.4, 12.5, 12.6, 12.7, 12.8, 12.9, 12.10) et le conduit de raccordement (12.11) est agencé à la même distance radiale de la surface extérieure de l'élément de conduite (15) que les conduits de transfert et comprend une ramification (12.11a) pour raccorder la surface extérieure cylindrique de l'élément de conduite (15) au conduit de raccordement (12.11),
**caractérisé en ce que** le conduit central (14) comprend une ramification (14a) pour raccorder la surface extérieure cylindrique de l'élément de conduite (15) au conduit central (14).

2. Élément de conduite (15) selon la revendication 1, dans lequel les conduits de transfert (12.1, 12.2, 12.3, 12.4, 12.5, 12.6, 12.7, 12.8, 12.9, 12.10) ne présentent des ouvertures que sur la première surface d'extrémité (15a) et la seconde surface d'extrémité (15b) de l'élément de conduite (15).

3. Élément de conduite (15) selon la revendication 1 ou 2, dans lequel le conduit central (14) n'est relié à la surface extérieure cylindrique de l'élément de conduite (15) que par l'intermédiaire d'une ramification unique (14a) .

4. Élément de conduite (15) selon l'une quelconque des revendications 1 à 3, dans lequel le conduit de raccordement (12.11) n'est relié à la surface extérieure cylindrique de l'élément de conduite (15) que par l'intermédiaire d'une ramification unique (12.11a).

5. Élément de conduite (15) selon l'une quelconque des revendications précédentes, dans lequel le conduit central (14) est agencé de manière concentrique avec l'axe central longitudinal de l'élément de conduite (15) et les conduits de transfert (12.1, 12.2, 12.3, 12.4, 12.5, 12.6, 12.7, 12.8, 12.9, 12.10) et le conduit de raccordement (12.11) entourent le conduit central (14).

6. Élément de conduite (15) selon l'une quelconque des revendications précédentes, dans lequel les conduits de transfert (12.1, 12.2, 12.3, 12.4, 12.5, 12.6, 12.7, 12.8, 12.9, 12.10) et le conduit de raccordement (12.11) sont répartis dans l'élément de conduite (15) le long d'un chemin circulaire de sorte que chaque conduit de transfert ou que le conduit de raccordement est situé à la même distance angulaire du conduit précédent (12.1, 12.2, 12.3, 12.4, 12.5, 12.6, 12.7, 12.8, 12.9, 12.10, 12.11).

7. Élément de conduite (15) selon l'une quelconque des revendications précédentes, dans lequel le conduit central (14) a un diamètre supérieur à celui des conduits de transfert (12.1, 12.2, 12.3, 12.4, 12.5, 12.6, 12.7, 12.8, 12.9, 12.10).

8. Élément de conduite (15) selon l'une quelconque des revendications précédentes, dans lequel la ramification (14a) du conduit central (14) est agencée à proximité de la seconde extrémité de l'élément de conduite (15) et la ramification (12.11a) du conduit de raccordement (12.11) est agencée à proximité de la seconde extrémité de l'élément de conduite (15).

9. Élément de conduite (15) selon l'une quelconque des revendications précédentes, dans lequel la ramification (14a) du conduit central (14) et la ramification (12.11a) du conduit de raccordement (12.11) sont agencées à une certaine distance l'une de l'autre dans la direction longitudinale de l'élément de conduite (15).

10. Élément de raccordement (16) destiné à coopérer avec deux éléments de conduite (15) selon l'une quelconque des revendications précédentes, l'élément de raccordement (16) comprenant un corps ayant une cavité cylindrique (17), ladite cavité (17) étant conçue pour recevoir une extrémité d'un élément de conduite (15) et une extrémité opposée d'un autre élément de conduite (15) identique, de sorte que les deux éléments de conduite (15) sont situés de manière concentrique et que les surfaces d'extrémité (15a, 15b) des deux éléments de conduite (15) se font face, dans lequel le corps comprend un premier perçage (18) s'étendant à partir d'une surface extérieure de l'élément de raccordement (16) dans la cavité cylindrique (17) pour une communication fluidique avec la ramification (14a) du conduit central (14) d'un des éléments de conduite (15), et un second perçage (19) s'étendant à partir d'une surface extérieure de l'élément de raccordement (16) dans la cavité cylindrique (17) pour une communication fluidique avec la ramification (12.11a) du conduit de raccordement (12.11) d'un des éléments de conduite (15), **caractérisé en ce que** l'élément de raccordement (16) comprend une première rainure (21) qui est agencée dans la cavité cylindrique (17) de l'élément de raccordement (16) pour établir une communication fluidique entre la ramification (14a) du conduit central (14) de l'élément de conduite (15) et le premier perçage (18) de l'élément de raccordement (16), et une seconde rainure (22) qui est agencée dans la cavité cylindrique (17) de l'élément de raccordement (16) pour établir une communication fluidique entre la ramification (12.11a) du conduit de raccordement (12.11) de l'élément de conduite (15) et le second perçage (19) de l'élément de raccordement (16).

11. Élément de raccordement (16) selon la revendication 10, dans lequel la première rainure (21) et la seconde rainure (22) s'étendent dans la direction circonférentielle de l'élément de raccordement (16).

12. Élément de raccordement (16) selon la revendication 10 ou 11, dans lequel la première rainure (21) et la seconde rainure (22) s'étendent sur l'ensemble du périmètre intérieur de l'élément de raccordement (16).

13. Système d'air de démarrage (1) pour un moteur à piston (20), le système d'air de démarrage (1) comprenant un élément de conduite (15) selon l'une quelconque des revendications 1 à 9 pour chaque cylindre (3) du moteur (20) .

14. Système d'air de démarrage (1) selon la revendication 13, le système comprenant en outre, entre n'importe quelle paire d'éléments de conduite (15) consécutifs du système d'air de démarrage (1), un élément de raccordement (16), ledit élément de raccordement (16) comprenant un corps ayant une cavité cylindrique (17), ladite cavité (17) étant conçue pour recevoir une extrémité d'un élément de conduite (15) et une extrémité opposée d'un autre élément de conduite (15) identique, de sorte que les deux éléments de conduite (15) sont situés de manière concentrique et que les surfaces d'extrémité (15a, 15b) des deux éléments de conduite (15) se font face, dans lequel le corps comprend un premier perçage (18) s'étendant à partir d'une surface extérieure de l'élément de raccordement (16) dans la cavité cylindrique (17) pour une communication fluidique avec la ramification (14a) du conduit central (14) d'un des éléments de conduite (15), et un second perçage (19) s'étendant à partir d'une surface extérieure de l'élément de raccordement (16) dans la cavité cylindrique (17) pour une communication fluidique avec la ramification (12.11a) du conduit de raccordement (12.11) d'un des éléments de conduite (15).

15. Moteur à piston (20) comprenant un système d'air de démarrage (1) selon la revendication 13 ou 14.
